(19) Europäisches Patentamt

European Patent Office

Office européen des brevets

(11) **EP 0 973 177 B1**

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(51) Int Cl.$^7$: **H01F 7/18**

(21) Anmeldenummer: **99112673.1**

(22) Anmeldetag: **02.07.1999**

(54) **Verfahren zur Bewegungssteuerung eines Ankers eines elektromagnetischen Aktuators**

Method for controlling the motion of an armature of an electromagnetic actuator

Procédé de commande du mouvement d'une armature d'un vérin électromagnétique

(84) Benannte Vertragsstaaten:
**DE FR GB IT SE**

(30) Priorität: **16.02.1999 DE 19906437**
**17.07.1998 DE 19832198**

(43) Veröffentlichungstag der Anmeldung:
**19.01.2000 Patentblatt 2000/03**

(73) Patentinhaber: **Bayerische Motoren Werke Aktiengesellschaft**
**80788 München (DE)**

(72) Erfinder: **Cosfeld, Ralf**
**80807 München (DE)**

(56) Entgegenhaltungen:
**CH-A- 684 508**

**Beschreibung**

Die Erfindung betrifft ein Verfahren zur Bewegungssteuerung eines Ankers eines elektromagnetischen Aktuators, insbesondere zur Betätigung eines Gaswechsel-Hubventiles einer Brennkraftmaschine, wobei der Anker oszillierend zwischen zwei Elektromagnet-Spulen jeweils gegen die Kraft zumindest einer Rückstellfeder durch alternierende Bestromung der Elektromagnet-Spulen bewegt wird, und wobei mit einer Annäherung des Ankers an die zunächst bestromte Spule während des sogenannten Fangvorganges die an der den Anker einfangenden Spule anliegende elektrische Spannung reduziert wird. Zum technischen Umfeld wird auf die DE 195 30 121 A1 verwiesen.

Ein bevorzugter Anwendungsfall für einen elektromagnetischen Aktuator mit den Merkmalen des Anspruchs 1 ist der elektromagnetisch betätigte Ventiltrieb von Brennkraftmaschinen, d.h. die Gaswechsel-Hubventile einer Hubkolben-Brennkraftmaschine werden von derartigen Aktuatoren in gewünschter Weise betätigt, d.h. oszillierend geöffnet und geschlossen. Bei einem derartigen elektromechanischen Ventiltrieb werden die Hubventile einzeln oder auch in Gruppen über elektromechanische Stellglieder, die sog. Aktuatoren bewegt, wobei der Zeitpunkt für das Öffnen und das Schließen jedes Hubventiles im wesentlichen völlig frei gewählt werden kann. Hierdurch können die Ventilsteuerzeiten der Brennkraftmaschine optimal an den aktuellen Betriebszustand (dieser ist durch Drehzahl und Last definiert) sowie an die jeweiligen Anforderungen hinsichtlich Verbrauch, Drehmoment, Emissionen, Komfort und Ansprechverhalten eines von der Brennkraftmaschine angetriebenen Fahrzeuges angepaßt werden.

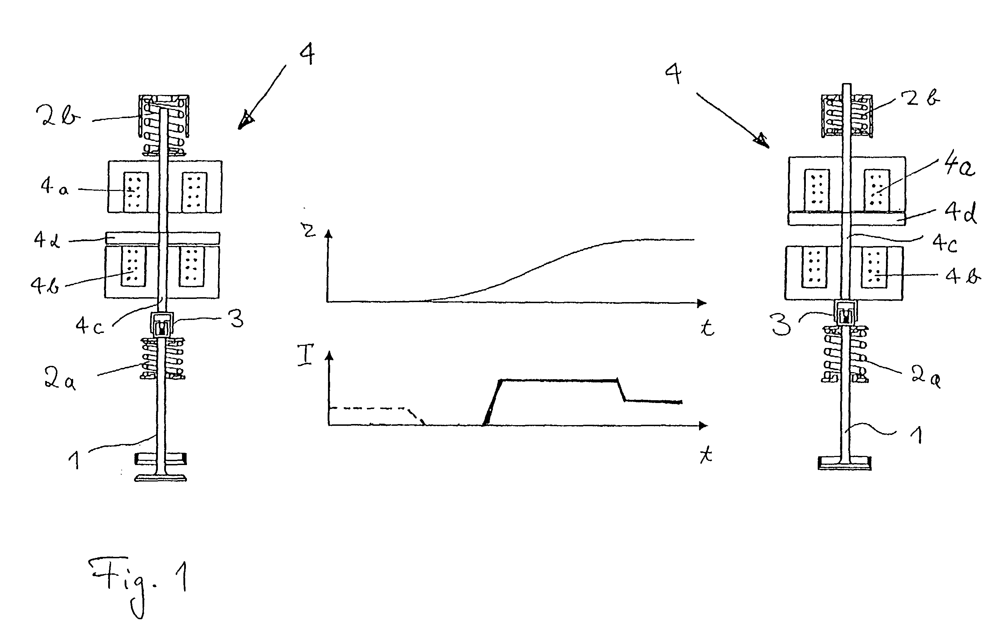

Die wesentlichen Bestandteile eines bekannten Aktuators zur Betätigung der Hubventile einer Brennkraftmaschine sind ein Anker sowie zwei Elektromagneten für das Halten des Ankers in der Position "Hubventil offen", bzw. "Hubventil geschlossen" mit den zugehörigen Elektormagnet-Spulen, und ferner Rückstellfedern für die Bewegung des Ankers zwischen den Positionen "Hubventil offen" und "Hubventil geschlossen". Hierzu wird auch auf die beigefügte **Figur 1** verwiesen, die einen derartigen Aktuator mit zugeordnetem Hubventil in den beiden möglichen Endlagen des Hubventiles und Aktuator-Ankers zeigt, und wobei zwischen den beiden gezeigten Zuständen bzw. Positionen der Aktuator-Hubventil-Einheit der Verlauf des Ankerhubes bzw. Ankerweges zwischen den beiden Elektromagnet-Spulen und ferner der Verlauf des Stromflusses in den beiden Elektromagnet-Spulen jeweils über der Zeit entsprechend einem (gegenüber der eingangs genannten DE 195 30 121 A1 einfacheren) bekannten Stand der Technik dargestellt ist.

Wie ersichtlich ist in **Figur 1** der Schließvorgang eines Brennkraftmaschinen-Hubventiles dargestellt, welches mit der Bezugsziffer 1 bezeichnet ist. Wie üblich greift an diesem Hubventil 1 eine Ventilschließfeder 2a an, ferner wirkt auf den Schaft des Hubventiles 1 - hier unter Zwischenschaltung eines hydraulischen Ventilspielausgleichselementes 3 - der in seiner Gesamtheit mit 4 bezeichnete Aktuator ein. Dieser besteht neben zwei Elektromagnet-Spulen 4a, 4b aus einer auf den Schaft des Hubventiles 1 einwirkenden Stößelstange 4c, die einen Anker 4d trägt, der zwischen den Elektromagnet-Spulen 4a, 4b oszillierend längsverschiebbar geführt ist. Am dem Schaft des Hubventiles 1 abgewandten Ende der Stößelstange 4c greift ferner eine Ventilöffnungsfeder 2b an.

Hierbei handelt es sich somit um ein schwingungsfähiges System, für welches die Ventilschließfeder 2a und die Ventilöffnungsfeder 2b eine erste sowie eine zweite Rückstellfeder bilden, für welche folglich im weiteren ebenfalls die Bezugsziffern 2a, 2b verwendet werden. Linksseitig ist in Figur 1 die erste Endposition dieses schwingungsfähigen Systemes dargestellt, in welcher das Hubventil 1 vollständig geöffnet ist und der Anker 4d an der unteren Elektromagnet-Spule 4b anliegt, die im folgenden auch als Öffner-Spule 4b bezeichnet wird, nachdem diese Spule 4b das Hubventil 1 in seiner geöffneten Position hält. Rechtsseitig ist in Figur 1 die zweite Endposition des schwingungsfähigen Systemes dargestellt, in welcher das Hubventil 1 vollständig geschlossen ist und der Anker 4d an der oberen Elektromagnet-Spule 4a anliegt, die im folgenden auch als Schließer-Spule 4a bezeichnet wird, nachdem diese Spule 4a das Hubventil 1 in seiner geschlossenen Position hält.

Im folgenden wird nun kurz der Schließvorgang des Hubventils 1 beschrieben, d.h. in Figur 1 der Übergang vom linksseitigen Zustand in den rechtsseitig dargestellten Zustand; dazwischen sind die entsprechenden Verläufe der in den Spulen 4a, 4b fließenden elektrischen Ströme I sowie der Hubverlauf bzw. die Wegkoordinate z des Ankers 4d jeweils über der Zeit t aufgetragen.

Ausgehend von der linksseitigen Position "Hubventil offen" wird zunächst die Öffner-Spule 4b bestromt, um den Anker 4d in dieser Position gegen die gespannte Ventilschließfeder 2a (= untere erste Rückstellfeder 2a) zu halten, wobei der Strom I in dieser Spule 4b im I-t-Diagramm gestrichelt dargestellt ist. Wird nun der Strom I der Öffner-Spule 4b für einen gewünschten Übergang nach "Hubventil geschlossen" ausgeschaltet, so löst sich der Anker 4d von dieser Spule 4b und das Hubventil 1 wird durch die gespannte Ventilschließfeder 2a in etwa bis zu seiner Mittellage (nach oben hin) beschleunigt, bewegt sich jedoch aufgrund seiner Massenträgheit weiter und spannt dabei die Ventilöffnungsfeder 2b, so daß das Hubventil 1 (und der Anker 4d) dadurch abgebremst werden. Daraufhin wird die Schließer-Spule 4a zu einem geeigneten Zeitpunkt bestromt (der Strom I für die Spule 4a ist im I-t-Diagramm in durchgezogener Linie dargestellt), wodurch diese Spule 4a den Anker 4d einfängt - hierbei handelt es sich um den sog. Fangvorgang -, und ihn schließlich in der rechtsseitig dargestellten Position "Hubventil geschlossen" hält. Nachdem der Anker 4d sicher von der Spule 4a gefangen ist, wird in dieser im übrigen auf ein niedrigeres Haltestrom-Niveau umgeschaltet (vgl. I-t-Diagramm).

Der umgekehrte Übergang von "Hubventil geschlossen" zu "Hubventil offen" geschieht ausgehend von der in Figur 1 rechtsseitig dargestellten Position analog durch Ausschalten des Stromes I in der Schließer-Spule 4a und zeitversetztes Einschalten des Stromes für die Öffner-Spule 4b. Generell wird dabei für das Bestromen der Spulen 4a, 4b an diese eine ausreichende elektrische Spannung gelegt, während das Abschalten des elektrischen Stromes I durch eine Herabsetzung der elektrischen Spannung auf den Wert "Null" initiiert wird. Die notwendige elektrische Energie für den Betrieb jedes Aktuators 4 wird dabei entweder dem Bordnetz des von der zugehörigen Brennkraftmaschine angetriebenen Fahrzeuges entnommen oder über eine separate, dem Ventiltrieb der Brennkraftmaschine angepaßte Energieversorgung bereitgestellt. Dabei wird die elektrische Spannung durch die Energieversorgung konstant gehalten, und der Spulenstrom I der den Brennkraftmaschinen-Hubventilen 1 zugeordneten Aktuatoren 4 durch ein Steuergerät derart gesteuert, daß sich die notwendigen Kräfte für das Öffnen, Schließen und Halten des bzw. der Hubventile 1 in der jeweils gewünschter Position ergeben.

Beim soeben erläuterten Stand der Technik wird der Spulenstrom I während des sogenannten Fangvorganges, in welchem eine der beiden Spulen 4a, 4b danach trachtet, den Anker 4d einzufangen (hierbei handelt es sich um die eingangs genannte Endphase der Anker-Bewegung), vom genannten Steuergerät bzw. von einer Steuereinheit durch Taktung auf einen im wesentlichen konstanten Wert geregelt, der groß genug ist um den Anker 4d unter allen Bedingungen sicher einzufangen. Nun ist die Kraft der fangenden Elektromagnet-Spule 4a bzw. 4b auf den Anker 4d näherungsweise proportional zum Strom I und umgekehrt proportional zum Abstand zwischen Spule und Anker. Wird nun - wie im bekannten Stand der Technik - ein im wesentlichen konstanter Strom I eingestellt, so steigt die auf den Anker 4d einwirkende Magnet-Kraft mit seiner Annäherung an die jeweilige ihn einfangende Spule 4a bzw. 4b umgekehrt proportional zum verbleibenden Spalt, wodurch die Ankerbeschleunigung und die Ankergeschwindigkeit ansteigen. Hieraus resultiert eine hohe Auftreffgeschwindigkeit des Ankers 4d auf die jeweilige Elektromagent-Spule 4a bzw. 4b, was zum einen einen hohen Verschleiß im Aktuator 4, zum anderen aber auch eine hohe Geräuschentwicklung zur Folge hat. Ein weiterer Nachteil sind die bei der kurz beschriebenen getakteten Stromregelung auftretenden Umschaltverluste der Transistoren, die eine erhöhte Leistungsaufnahme und Temperaturbelastung des verwendeten Steuergerätes sowie eine erhöhte elektromagnetische Abstrahlung in den Zuleitungen der Aktuatoren zur Folge haben.

Verbesserungen insbesondere im Hinblick auf die Geräuschentwicklung sowie den Aktuatorverschleiß bringt der aus der eingangs genannten DE 195 30 121 A1 bekannte Stand der Technik. Hierin ist ein Verfahren zur Reduzierung der Auftreffgeschwindigkeit eines Ankers an einem elektromagnetischen Aktuator vorgeschlagen, wobei mit einer Annäherung des Ankers an die Polfläche der den Anker einfangenden Spule die an dieser anliegende Spannung auf einen vorgebbaren Maximalwert begrenzt (d.h. im wesentlichen reduziert) wird, so daß der durch die Spule fließende Strom während eines Teils der Zeit der Spannungsbegrenzung abfällt. In dieser besagten Schrift ist ferner noch davon die Rede, daß das Ausmaß der Spannungsbegrenzung bzw. Spannungsreduzierung in einem Kennfeld festgelegt sein kann, wobei zu vermuten ist, daß die entsprechenden Werte und insbesondere auch der jeweilige Zeitpunkt, zu welchem diese Spannungsreduzierung einsetzen soll, auf experimentellem Wege bestimmt werden müssen.

Demgegenüber weitere Verbesserungen aufzuzeigen, ist Aufgabe der vorliegenden Erfindung, d.h. es soll ein einfach praktikables und dabei effizientes Verfahren zur Bewegungssteuerung eines Ankers eines elektromagnetischen Aktuators nach dem Oberbegriff des Anspruchs 1 aufgezeigt werden. Dabei soll zunächst im wesentlichen die sog. "Endphasen-Bewegung" verbessert steuerbar sein, d.h. derjenige Abschnitt im oszillierenden Bewegungsablauf des Ankers zwischen den beiden Magnetspulen, in welchem sich der Anker an eine der Magnetspulen annähernd vor dieser Magnetspule befindet und von dieser eingefangen werden soll. In anderen Worten ausgedrückt soll ein Regelungsverfahren aufgezeigt werden, das für die Endphasen-Bewegung während des sog. Fangvorganges die Auftreffgeschwindigkeit des Ankers auf der ihn einfangenden Magnetspule reduziert.

Die Lösung dieser genannten Aufgabe ist dadurch gekennzeichnet, daß die Spannung zunächst auf den Wert "Null" reduziert und somit abgeschaltet wird, so daß sich an die Fangphase des Fangvorganges eine Bremsphase anschließt, und daß kurz vor dem Auftreffen des Ankers auf die Spule an diese wieder elektrische Spannung angelegt und diese somit eingeschaltet wird, wobei die jeweiligen Schalt-Zeitpunkte aus einer im wesentlichen zeitoptimalen Regelung abgeleitet werden. Vorteilhafte Aus- und Weiterbildungen sind Inhalt der Unteransprüche.

Näher erläutert wird die Erfindung anhand eines bevorzugten Ausführungsbeispieles, für welches weiterhin optionale Ergänzungen angegeben sind. Dabei enthält dieses bevorzugte Ausführungsbeispiel bereits Bestandteile, die Ergänzungen der eigentlichen Erfindung darstellen und demzufolge Inhalt der Unteransprüche sind. Des besseren Verständnisses wegen sind diese betreffenden Bestandteile teilweise bereits in der grundlegenden Beschreibung enthalten.

Allgemein wird nach der vorliegenden Erfindung vorgeschlagen, die bekannte Stromregelung oder die ebenfalls bekannte (empirisch festzulegende) Spannungsreduzierung während des Fangvorganges für den Anker durch eine im wesentlichen zeitoptimale Regelung zu ersetzen, welche die elektrische Spannung während des Fangvorganges (d.h. in der Endphase der Anker-Bewegung) zunächst auf den Wert "Null" reduziert und hierdurch die sog. Fangphase unterbricht, so daß sich an die Fangphase eine sog. Bremsphase anschließt, und welche kurz vor einem Auftreffen des Ankers auf die Spule - d.h. immer noch während des Fangvorganges innerhalb einer sog. Auftreffphase - an diese Spule wieder elektrische Spannung anlegt, wobei die jeweiligen Schalt-Zeitpunkte für das Abschalten und Zuschalten der elektrischen Spannung aus der besagten (zumindest im wesentlichen) zeitoptimalen Regelung abgeleitet werden.

Dabei kann ein im wesentlichen zeitoptimaler Regler die genannten Schalt-Zeitpunkte anhand zumindest einer eine gewünschte Anker-Sollbewegung beschreibenden Soll-Trajektorie bestimmen. Ferner kann dem die (im wesentlichen) zeitoptimale Regelung ausführenden im wesentlichen zeitoptimalen Regler ein Zusatzregler nebengeordnet sein, der die Annäherung des Ankers an die ihn einfangende Spule überwacht, und in welchem die Soll-Trajektorien aus dem zeitoptimalen Regler übernommen und zeit- oder wegabhängig abgelegt werden, und der eine zusätzliche Regelung insbesondere in der Auftreffphase vornimmt, wobei die von dem oder den Regler(n) benötigten Zustandsgrößen durch einen sog. Beobachter rekonstruiert werden.

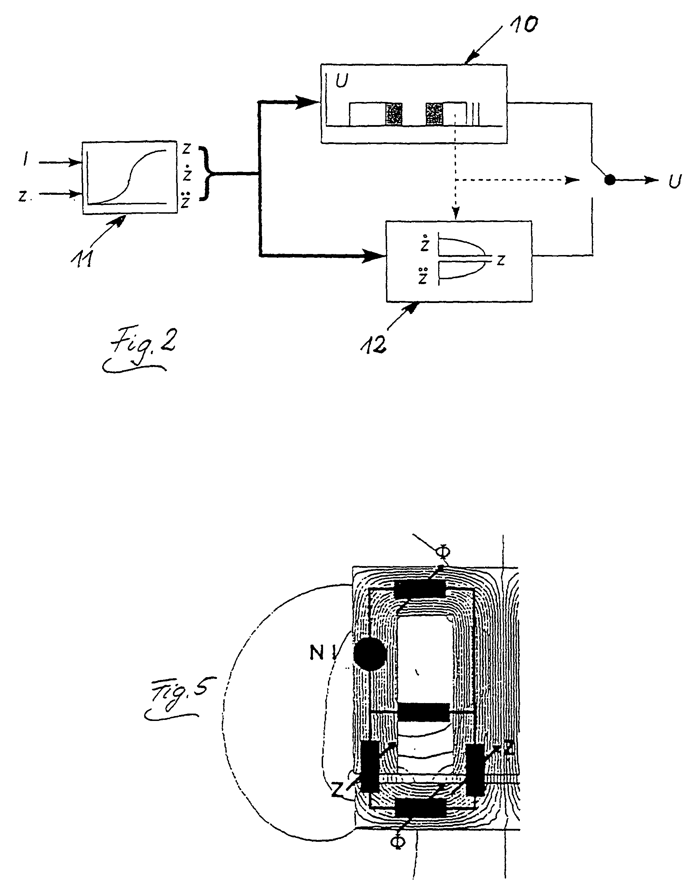

In **Figur 2** ist das entsprechende Regelungskonzept als Blockbild dargestellt, wobei der zeitoptimale Regler die Bezugsziffer 10 trägt, und die Regelung anhand der Signale eines sog. Beobachters 11 erfolgt, dessen Signale ferner von einem dem Regler 10 nebengeordneten Zusatzregler 12 verarbeitet werden. Die Ausgangsgröße des Regelungskonzeptes (bzw. der beiden Regler 10, 12) ist die an der jeweils den Anker 4d (vgl. hierzu Figur 1) einfangenden Spule 4a bzw. 4b angelegte bzw. anliegende elektrische Spannung U.

Dabei ist die dem Hubverlauf des Hubventiles 1 bzw. Ankers 4d entsprechende Position des Ankers 4d zwischen den Spulen 4a, 4b durch die Wegkoordinate z - diese wird auf geeignete Weise gemessen - eine Eingangsgröße des hier beschriebenen Regelungskonzeptes, welche dem Beobachter 11 mitgeteilt und in diesem weiter verarbeitet wird. Der Einfachheit halber wird dabei im folgenden die Position des Ankers direkt mit "z" bezeichnet, ohne den erklärenden Begriff "Wegkoordinate" zu verwenden.

Aus dieser Wegkoordinate bzw. Anker-Position z ist im übrigen durch einmalige bzw. zweimalige Ableitung über der Zeit t die Bewegungsgeschwindigkeit $\dot{z}$ des Ankers sowie die Anker-Beschleunigung $\ddot{z}$ schätzbar bzw. ermittelbar. Diese abgeleiteten Größen $\dot{z}$, $\ddot{z}$ werden dabei vom Beobachter 11 ermittelt und den Reglern 10, 12 mitgeteilt.

Eine weitere Eingangsgröße des hier beschriebenen Regelungskonzeptes, die dem Beobachter 11 mitgeteilt und in diesem weiter verarbeitet wird, ist - wie Fig. 2 zeigt - der in den jeweiligen Spulen 4a, 4b (vgl. Fig. 1) ermittelte Stromfluß I.

Bevorzugt unterteilt der zeitoptimale Regler 10 den gesamten Fangvorgang des Ankers 4d in drei Phasen, nämlich:

- erstens eine Fangphase FP,
- zweitens eine sich daran anschließende Bremsphase BP, und
- drittens eine hierauf folgende Auftreffphase AP.

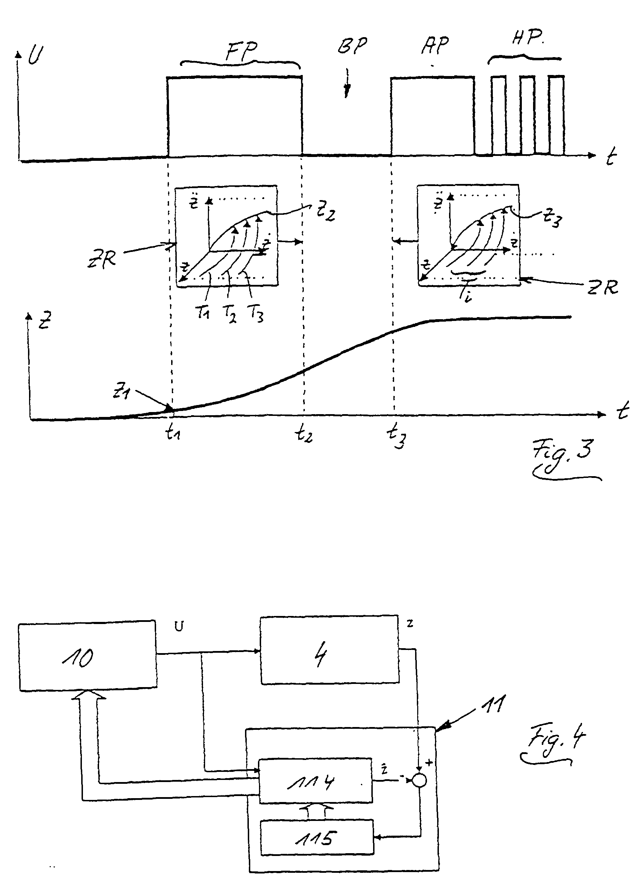

An die letzgenannte schließt sich als viertes die übliche Haltephase HP an, in welcher der Anker 4d, nachdem er sicher auf die jeweilige Elektromagnet-Spule 4a bzw.4b aufgetroffen ist, an dieser gehalten wird. Diese einzelnen Phasen sind in der an späterer Stelle noch ausführlich erläuterten Figur 3 dargestellt. Dabei wird in der Fangphase FP sowie in der Auftreffphase AP an die jeweilige, den Anker 4d einfangende Spule 4a bzw. 4b eine elektrische Spannung angelegt (und somit ein Stromfluß I initiiert), während in der Bremsphase BP die an der jeweiligen Spule anliegende Spannung auf den Wert "Null" reduziert und somit abgeschaltet wird.

Das elektrische Strom- und Spannungsprofil in der Fangphase FP sind frei wählbar. In der Bremsphase BP sowie in der Auftreffphase AP kann optional eine zusätzliche Feinregelung des Auftreffvorganges durch den bereits erwähnten Zusatzregler 12 erfolgen. Ferner können das Geschwindigkeitsund Beschleunigungsprofil der Ankerbewegung positions- oder wegabhängig vorgegeben werden.

Erfindungsgemäß werden die beiden Umschaltbedingungen zwischen den genannten drei Phasen FP, BP, AP durch eine sog. Schaltfläche (hierbei handelt es sich um ein Kennfeld) sowie durch eine Schaltkurve (hierbei handelt es sich um eine Kennlinie in dieser Schaltfläche) ermittelt und zwar insbesondere (d.h. für die folgenden Erläuterungen zunächst alleinig) durch den (zumindest im wesentlichen) zeitoptimalen Regler 10.

Neben diesen beiden dem Fachmann für Regelungstechnik geläufigen Begriffen einer "Schaltfläche" und einer "Schaltkurve" wird der ebenfalls bekannte Begriff "Trajektorie" verwendet, bei welcher es sich um die Bahnkurve des mittels des zeitoptimalen Reglers 10 gesteuert zu bewegenden Objektes im Zustandsraum (an späterer Stelle mit ZR bezeichnet) handelt, hier also um die Bahnkurve des Ankers 4d im Zustandsraum ZR (vgl.abermals vorab Figur 3) auf seinem Weg zwischen den beiden Spulen 4a, 4b. Mit einer sog. Soll-Trajektorie läßt sich also eine gewünschte Anker-Sollbewegung beschreiben.

Im folgenden wird nun ein bevorzugter zeitoptimaler Regler 10 näher beschrieben:

Zur Erzielung einer gewünschten Reduktion seiner Auftreffgeschwindigkeit auf der jeweiligen ihn einfangenden Spule 4a bzw. 4b muß der Anker 4d (vgl. Fig.1) bereits in seiner Flugphase, d.h. vor dem eigentlichen Auftreffen, abgebremst werden, und zwar in der sog. Bremsphase BP. Allerdings sollte diese Bremsphase BP die Öffnungs- und Schließzeit des vom Aktuator 4 betätigen Brennkraftmaschinen-Hubventiles 1 nicht mehr als nötig verlängern. Diese Frage nach dem schnellsten Regelvorgang zum Erreichen einer Endlage wird von der Theorie der zeitoptimalen Regelung beantwortet. Demnach ist das optimale Profil einer Stellgröße ein Umschalten der Eingangsgröße zwischen Minimalwert und Maximalwert, wobei die Zahl der Umschaltungen von der Systemordnung der Regelstrecke abhängt.

Für ein aperiodisches System n-ter Ordnung genügen genügen nach dem dem Fachmann bekannten Satz von Feldbaum eine Einschaltung, n-1 Umschaltungen und eine Ausschaltung der maximalen Stellgröße, jeweils zum richtigen Zeitpunkt, um sämtliche Zustandsgrößen von beliebigen Anfangswerten in kürzest möglicher Zeit in ihre stationären Endwerte zu bringen, d.h. das System in die Ruhelage zu führen.

Zur Auslegung der zeitoptimalen Regelung muß daher die Systemordnung des Aktuators 4 bekannt sein. Sie ist durch die Zahl unabhängiger Zustandsgrößen bestimmt. Physikalisch gesehen ist der Zustand eines dynamischen Systems zu jedem Zeitpunkt durch den Energiegehalt der im System vorhandenen unabhängigen Energiespeicher bestimmt; der aktuelle Zustand des Systems wird durch die aktuellen Werte der Zustandsgrößen eindeutig festgelegt. Im vorliegenden Anwendungsfall (vgl. hierzu auch Fig. 1) korrespondiert der magnetische Fluß $\Phi$ in der bzw. den Spulen 4a, 4b mit der Energie des Magnetfeldes, die Bewegungsgeschwindigkeit $\dot{z}$ des Ankers 4d mit der kinetischen Energie der bewegten Massen (sich im wesentlichen zusammensetzend aus Hubventil 1, Stößelstange 4c und Anker 4d) und die Ankerposition z mit der potentiellen Energie der beiden Rückstellfedern 2a, 2b.

Aufgrund der drei unabhängigen Energiespeicher ist das vorliegende System von dritter Ordnung, so daß eine zeitoptimale Regelung 3.Ordnung mit den Zustandsgrößen $\Phi$, $\dot{z}$ und z möglich wäre. Diese mögliche Wahl der Zustandsgrößen ist aber nicht zwingend vorgeschrieben und insbesondere nicht auf die eigentlichen Speichervariablen beschränkt; wesentlich ist, daß durch die Zustandsgrößen der Systemzustand eindeutig definiert ist. So kann z.B. anstelle des Flusses $\Phi$ auch die Magnetkraft, oder der Spulenstrom I oder die Ankerbeschleunigung $\ddot{z}$ verwendet werden.

Für die weiteren Ausführungen wird neben der Ankerposition z und Anker-Geschwindigkeit $\dot{z}$ für den Entwurf des zeitoptimalen Reglers 10 die Ankerbeschleunigung $\ddot{z}$ als dritte Zustandsgröße gewählt, da sie als direkte Ableitung der Ankergeschwindigkeit $\dot{z}$ eine leicht interpretierbare Größe darstellt. Prinzipiell kann die Regelung aber auch mit jeder anderen der erwähnten Größen aufgebaut werden. Besonders vorteilhaft ist es, wenn der zeitoptimale Regler 10 von dritter Ordnung ist, wodurch der verzögerte Aufbau von Magnetfeld und Magnetkraft im Regelungskonzept berücksichtigt werden kann.

Nach der Theorie der zeitoptimalen Regelung sind für ein System 3.Ordnung zwei Schaltpunkte zu bestimmen, wobei der erste Umschaltpunkt eine Funktion aller drei Zustandsgrößen (und somit eine - bereits kurz angesprochene - Schaltfläche) und der zweite Umschaltpunkt eine Funktion von zwei der drei Zustandsgrößen (und somit eine - ebenfalls bereits kurz erwähnte sog. - Schaltkurve) ist.

Für die Anwendung der vorgeschlagenen zeitoptimalen Regelung ist außerdem zu berücksichtigen daß sich das System zu Beginn des Regelvorganges nicht in Ruhelage befindet, sondern bereits im Übergang aus der vorherigen Haltephase HP an der anderen, der jetzt den Anker 4d einfangenden gegenüberliegenden Spule (4b bzw. 4a).

Daher ist zu berücksichtigen, daß die elektrische Spannung an der jetzt den Anker 4d einfangenden Spule während einer Flug-Bewegung des Ankers eingeschaltet wird.

Die beigefügte und im folgenden erläuterte **Figur 3** zeigt die einzelnen Phasen der zeitoptimalen Regelung während der Fangvorganges des Ankers 4d durch eine der beiden Spulen 4a, 4b bei einem System nach Figur 1:

Jeweils über der Zeit t ist dabei im oberen Diagramm die an die den Anker einfangende Elektromagnet-Spule angelegte elektrische Spannung U aufgetragen, während im unteren Diagramm die zugehörige Wegkoordinate z des Ankers 4d (=Ankerposition z) dargestellt ist. Im oberen Diagramm sind dabei die einzelen erfindungsgemäßen Phasen, nämlich die Fangphase FP, die Bremsphase BP, und die Auftreffphase AP, an welche sich die übliche Haltephase HP anschließt, gekennzeichnet.

Was nun den Start der Fangphase FP zum Zeitpunkt $t_1$ betrifft, zu welchem die den Anker einfangende Spule mit elektrischer Spannung U beaufschlagt wird, so kann dieser Einschaltzeitpunkt $t_1$ grundsätzlich frei gewählt werden; es muß hierbei lediglich sichergestellt sein, daß der Anker 4d überhaupt noch eingefangen werden kann. Der Einfachheit halber wird hier vorgeschlagen, daß die Spannung U dann eingeschaltet wird, wenn die Ankerposition z eine bestimmte, wählbare Schwelle (diese wird mit $z_1$ bezeichnet) überschreitet. Grundsätzlich kann diese Schwelle $z_1$ auch variabel sein, wodurch zusätzliche Randbedingungen wie z.B. unterschiedliche auf das zu bewegende Hubventil 1 einwirkende äußere Kräfte (wie insbesondere Gaskräfte) in unterschiedlichen Betriebspunkten der Brennkraftmaschine berücksichtigt werden können.

Die sich an die Fangphase FP anschließende Bremsphase BP wird erfindungsgemäß durch Abschalten der elektrischen Spannung U gestartet, sobald die Ankerposition z eine Schaltfläche $z_2$ erreicht, die über den drei Zustandsgrößen Ankerposition z, Bewegungsgeschwindigkeit $\dot{z}$ des Ankers und Anker-Beschleunigung $\ddot{z}$ aufgespannt ist.

In Figur 3 wurde versucht, diese Schaltfläche $z_2$ im zugehörigen durch (z, $\dot{z}$, $\ddot{z}$) aufgespannten Zustandsraum ZR graphisch darstellen; diese Darstellung befindet sich dabei zwischen dem U-t-Diagramm und dem z-t-Diagramm und ist dem Zeitpunkt $t_2$, zu welchem die Bremsphase BP gestartet wird, zugeordnet. Dabei sind in diesem Zustandsraum ZR drei mögliche Trajektorien $T_1$, $T_2$, $T_3$, d.h. Bahnkurven, auf denen sich der Anker 4d bspw. bewegen kann, dargestellt.

Sobald nun die jeweils zutreffende, d.h. aktuelle Trajektorie T, (mit i = 1,2,3,.....n) auf die Schaltfläche $z_2$ im Zustandsraum ZR auftrifft (und zwar zum Zeitpunkt $t_2$), so wird die elektrische Spannung U an der den Anker 4d einfangenden Spule 4a (oder 4b) abgeschaltet, d.h. auf den Wert "Null" reduziert. Dies hat zur Folge, daß der Anker 4d ausgehend von der jetzt aktuellen Position $z_2$ (er befindet sich nun zum Zeitpunkt $t_2$ nämlich auf der Schaltfläche $z_2$) nicht nur nicht weiter beschleunigt, sondern aufgrund der unvermeidbaren Reibungs- und hier gewünschten Wirbelstrom-Verluste wie gewünscht abgebremst wird.

Um letztendlich bei geringstmöglicher Zeitverzögerung ein möglichst sanftes bzw. weiches Auftreffen des Ankers 4d auf der ihn aktuell einfangenden Elektromagnet-Spule 4a bzw. 4b zu erzielen, wird im Anschluß an die Bremsphase BP die sog. Auftreffphase AP gestartet, und zwar durch Wieder-Einschalten der elektrischen Spannung U in der betroffenen Spule 4a bzw. 4b. Dies erfolgt erfindungsgemäß zum Zeitpunkt $t_3$, sobald die Ankerposition z eine in der Schaltfläche $z_2$ liegende Schaltkurve $z_3$ erreicht, die durch die beiden Zustandsgrößen Bewegungsgeschwindigkeit $\dot{z}$ des Ankers und Anker-Beschleunigung $\ddot{z}$ definiert ist.

Auch diese Schaltkurve $z_3$ ist - dem Zeitpunkt $t_3$ zugeordnet - im Zustandsraum ZR inklusive möglicher Trajektorien $T_1$, $T_2$, $T_3$, längs derer sich der Anker 4d in diesem Zustandsraum ZR auf der Schaltfläche $z_2$ bewegen kann, dargestellt.

Nachdem nun der Anker 4d sicher auf der jeweiligen ihn einfangenden Spule 4a bzw. 4b aufgetroffen ist bzw. an dieser anliegt, wird die bereits im bekannten Stand der Technik übliche Haltephase HP eingeleitet, und zwar durch Umschalten auf Haltestromregelung, was wie dargestellt durch eine getaktete Beaufschlagung der jeweiligen Spule 4a, 4b mit der (gleichwertigen) elektrischen Spannung U erfolgt.

Die bislang hier beschriebene Ausführungsform des zeitoptimalen Reglers 10 als solcher einer dritten Ordnung ist die vorteilhafteste für die derzeit in Entwicklung befindlichen Aktuatoren 4 zur Betätigung von Brennkraftmaschinen-Hubventilen 1. Es sind jedoch durchaus auch Varianten hiervon möglich:

So ist auch eine zeitoptimale Regelung zweiter Ordnung denkbar, insbesondere wenn in einer künftigen Aktuatorkonstruktion das elektromagnetische Teilsystem deutlich schneller als das mechanische Teilsystem reagieren kann. Dann kann der Aktuator als System 2.Ordnung angenommen und die Reglerordnung entsprechend reduziert werden.

Möglich ist aber auch eine zeitoptimale Regelung vierter Ordnung. Dies kann notwendig werden, falls in einer künftigen Aktuatorkonstruktion die Auswirkung der Wirbelströme im Anker oder in der Spule auf das dynamische Verhalten des Aktuators nicht vernachlässigt werden kann. Ferner ist eine zeitoptimale Regelung fünfter Ordnung denkbar, falls in einer künftigen Aktuatorkonstruktion die Auswirkung der Wirbelströme im Anker und in der Spule auf das dynamische Verhalten des Aktuators nicht vernachlässigt werden kann.

Schließlich ist auch noch eine "im wesentlichen zeitoptimale Regelung" möglich, welche zwar nach der Theorie der Regelungstechnik keine "reine" zeitoptimale Regelung darstellt, die jedoch die in den bisherigen und folgenden Erläuterungen enthaltenen Erkenntnisse nutzt, um die Endphasen-Bewegung eines Ankers eines elektromagnetischen Aktuators insbesondere für die Betätigung eines Brennkraftmaschinen-Gaswechselventiles wie gewünscht zu regeln, d. h. insbesondere die Anker-Auftreffgeschwindigkeit zu reduzieren.

Wie aus der obigen ausführlichen Beschreibung der zeitoptimalen Regelung dritter Ordnung klar ersichtlich wird, ist diese (im wesentlichen) zeitoptimale Regelung in der Lage, irgendwelche Störungen auszugleichen, die auftreten, ehe die jeweilige Anker-Trajektorie $T_1$, $T_2$, $T_3$ (bzw. Soll-Trajektorie $T_i$) auf der Schaltfläche $z_2$ auftrifft. Später auftretende Störungen können mit dieser relativ einfachen Grundform des Regelungskonzeptes jedoch nicht mehr korrigiert werden.

Um auch einen danach evtl. auftretenden Restfehler auszugleichen, kann die Annäherung des Ankers 4d an die jeweilige Spule 4a, 4b durch den bereits kurz erwähnten Zusatzregler 12 (vgl. Fig. 2) überwacht werden, wobei die Soll-Trajektorien T, aus dem zeitoptimalen Regler 10 übernommen und im Zusatzregler 12 zeit- oder wegabhängig abgelegt werden können. Dabei ist je nach Größe des auftretenden Restfehlers eine Regelung alleinig in der Auftreffphase AP oder zusätzlich in der Bremsphase BP möglich.

Im folgenden wird kurz ein in der Auftreffphase AP wirkendender Zusatzregler 12 beschrieben. Für diesen sind die folgenden unterschiedlichen Ausführungsformen möglich:

In Form eines klassischen Reglers (PI-, PD,- PID-Regler) erfolgt die Auslegung des Zusatzreglers 12 bspw. anhand eines linearisierten Modelles des Aktuators 4 für die Endphase des Bewegungsablaufes des Ankers 4d. Es läßt sich jedoch zeigen, daß ein Aktuator wie der vorliegende mit einem klassischen Regler nicht vollständig steuerbar ist, d.h. es lassen sich keine beliebig kleinen Auftreffgeschwindigkeiten realisieren. Die tatsächlichen Auftreffgeschwindigkeiten hängen vom jeweiligen Aktuator, der Form der Soll-Trajektorien und von den auftretenden Störkräften ab. Ein nicht zu unterschätzender Vorteil des klassischen Reglers ist hingegen seine einfache Realisierbarkeit.

In Form eines linearen Zustandsreglers erfolgt die Auslegung des Zusatzreglers 12 ebenfalls anhand eines linearisierten Modelles des Aktuators für die Endphase des Bewegungsablaufes. Als Entwurfsverfahren kommt z.B. die Polvorgabe in Betracht. Durch einen derartigen Zusatzregler 12 wird das gesamte System vollständig steuerbar, d.h. es lassen sich prinzipiell beliebig geringe Auftreffgeschwindigkeiten realisieren. Da die Auslegung auf einem linearen Ansatz basiert, der Aktuator aber ein stark nichtlineares Verhalten zeigt, ist die Robustheit des Reglers gegenüber verändertem Aktuatorverhalten (Fertigungstoleranzen, Alterung) jedoch gering.

Weiterhin möglich ist ein nichtlinerarer Zustandsregler für den Zusatzregler 12, durch welchen man eine erhöhte Robustheit erreicht, insbesondere wenn der Zustandsregler bevorzugt als "sliding mode control" ausgeführt wird. In einem derartigen "sliding mode controller" kann zusätzlich die Tatsache berücksichtigt werden, daß die Leistungselektronik im getakteten Betrieb nur Stellsignale bestimmter Höhe umsetzen kann. Mit einer Auslegung nach dem "Sliding-mode-Prinzip" erhält man folgendes Stellgesetz:

$$S = \ddot{z} + 2\lambda \cdot \dot{z} + \lambda^2 \cdot z$$

$$U = \begin{cases} U_{max} & S \le S_{min} \\ 0 & S_{min} < S < S_{max} \\ U_{min} & S \ge S_{max} \end{cases}$$

mit $\lambda$, $S_{min}$, $S_{max}$ als applizierbaren Parametern. Dabei wird als Leistungselektronik eine Brückenschaltung angenommen, die über Freilaufkreis (U=0) und Sperrkreis (U=$U_{min}$) verfügt. Hier kann nun für die zusätzliche Regelung der Auftreffphase AP die Schaltfläche $z_2(\dot{z}, \ddot{z})$ des zeitoptimalen Reglers 10 als Sollwert für einen Dreipunktregler ($U_{min}$ / 0 / $U_{max}$) verwendet werden, der die aktuelle Ankerposition z bei Auftreten einer zu starken Abweichung korrigiert.

Im folgenden wird nun auf den eingangs der Beschreibung des bevorzugten Ausführungsbeispieles bereits kurz erwähnten Beobachter 11 ( vgl. hierzu auch Fig.2 sowie die im folgenden erläuterte **Figur 4** ) eingegangen:

Wie sich aus der bisherigen Beschreibung ergibt, benötigen sowohl der zeitoptimale Regler 10 als auch der ggf. vorhandene Zusatzregler 12 für die Durchführung ihrer Funktion drei Zustandsgrößen und zwar bevorzugt die Anker-Position $\dot{z}$, die Bewegungsgeschwindigkeit $\dot{z}$ des Ankers 4d sowie die Anker-Beschleunigung $\ddot{z}$. Grundsätzlich ist es möglich, diese Zustandsgrößen über geeignete Sensoren zu messen. Um jedoch Sensoren einzusparen oder kostspielige durch kostengünstige Sensoren zu ersezten, können zumindest zwei dieser Zustandsgrößen auch durch einen sog. Beobachter 11 rekonstruiert werden, der in Fig.4 in einem Blockschaltbild dargestellt ist.

In diesem Beobachter 11 ist dem Aktuator 4 ein Aktuatormodell 114 parallel geschaltet, das mit derselben Eingangsgröße wie der Aktuator 4, nämlich mit der an die jeweilige Spule 4a, 4b angelegten Spannung U gespeist wird. Die auf dieser Basis geschätzte Ankerposition $\hat{z}$ wird mit der tatsächlichen gemessenen Ankerposition z verglichen, und die Differenz hieraus ($\hat{z}$-z) wird über eine Korrekturfunktion 115 auf die Zustandsgrößen des Aktuatormodells 114 zurückgekoppelt. Bei einem Modellfehler oder bei einer fehlerhafter Schätzung der Anfangszustände gleicht der Beobachter 11 aufgrund der Korrekturfunktion 115 die geschätzten Zustände den tatsächlichen Zuständen an. Die Auslegung der Korrekturfunktion 115 kann dabei durch verschiedene Verfahren der linearen oder nichtlinearen Regelungstheorie erfolgen und soll hier nicht näher behandelt werden.

Im folgenden wird die bevorzugte Ausführungsform des Aktuatormodells 114 zur Ermittlung der geschätzten Ankerposition $\hat{z}$ beschrieben. In diesem Aktuatormodell 114 sind das mechanische und das elektromagnetische Verhalten des Aktuators 4 zu berücksichtigen. Die Mechanik läßt sich dabei durch einen Feder-Masse-Schwinger nachbilden, während das elektromagnetische Verhalten über die Induktionsgleichung beschrieben wird, so daß sich folgendes Differentialgleichungssystem ergibt:

$$\frac{d}{dt}\underline{X} = \frac{d}{dt}\begin{bmatrix} \Phi \\ \dot{z} \\ z \end{bmatrix} = \begin{bmatrix} 1/N \cdot (U - R \cdot I) \\ 1/m \cdot \left(F_{mag} - k_{fr} \cdot \dot{z} - k_{sp} \cdot z\right) \\ \dot{z} \end{bmatrix}$$

mit den folgenden Konstanten:

U: Spulenspannung
R: ohmscher Widerstand der Spule
I: Spulenstrom
N: Windungszahl der Spule
F: magnetischer Fluß

z : Ankerposition, Luftspalt
m: Summe der bewegten Massen
$k_{fr}$: Reibungskoeffizient
$k_{sp}$: Federkonstante

und den folgenden Kennfeldern

$$I = f_1(\Phi,z)$$
$$F_{mag} = f_2(\Phi,z)$$

wobei $f_1(\Phi,z)$ und $f_2(\Phi,z)$ aus Messungen oder Magnetfeldsimulationen zu bestimmen sind.

Vereinfachend können diese Beziehungen über ein magnetisches Netzwerk und dessen Kraftwirkung beschrieben werden:

$$F_{mag} = \frac{\Phi^2}{2\cdot\mu_0\cdot A},$$

mit A = Fläche senkrecht zum Fluß an der Grenzfläche zwischen Magnetspule und Luftspalt und

$$I = 1/N \cdot \Re(\Phi, z) \cdot \Phi$$

wobei der magnetische Widerstand $\Re$ sich für ein Netzwerk nach **Figur 5** zu berechnen ist.

Wie bei den bislang beschriebenen Reglern 10, 12, so sind auch beim Aktuatormodell 114 verschiedene Ausführungsformen möglich. Insbesondere kann anstelle des magnetischen Flusses $\Phi$ auch die Magnetkraft, der Spulenstrom I oder die Ankerbeschleunigung $\ddot{z}$ verwendet werden. Wesentlich ist auch hier, daß neben der Mechanik der verzögerte Aufbau von Magnetfeld und Magnetkraft im Aktuatormodell 114 berücksichtigt wird. Wie beim Regler 10 bzw. 12 auch kann im übrigen auch beim Aktuatormodell 114 eine veränderte Aktuatorkonstruktion durch eine Anpassung der Modellordnung berücksichtigt werden.

Nach einer vorteilhaften Weiterbildung des erfindungsgemäßen Verfahrens kann in das Regelungskonzept zumindest eine Zusatzfunktion integriert sein, nach welcher die Soll-Trajektorien des zeitoptimalen Reglers 10 nicht zu einer mit der mechanischen Endlage des Ankers 4d übereinstimmenden Endlage des Reglers 10 führen, was im folgenden anhand dreier möglicher zusätzlicher Funktionen näher beschrieben wird. Während nämlich nach den bisherigen Erläuterungen die sog. Soll-Trajektorien $T_i$ so ausgelegt wurden, daß die mechanische Endlage des Ankers 4d, in welcher dieser an einer der beiden Spulen 4a, 4b des Aktuators 4 anliegt (und in der Haltephase HP hieran gehalten wird), mit der Endlage des (im wesentlichen) zeitoptimalen Reglers 10 übereinstimmt, ist auch eine davon abweichende Regelstrategie möglich. Das beschriebene (im wesentlichen) zeitoptimale Reglerprinzip läßt nämlich auch eine reglerspezifische Endlage zu, die sich von der mechanischen Endlage des Ankers 4d unterscheidet, so daß - im bevorzugten Anwendungsfall als Aktuator zur Betätigung zumindest eines Brennkraftmaschinen-Hubventiles 1 (vgl. nochmals Fig.1) - quasi beliebige Zwischenpositionen dieses Hubventiles 1 zwischen seinen beiden Endpositionen "Hubventil vollständig offen" und "Hubventil geschlossen" quasi stationär eingestellt werden können.

Dabei sei ausdrücklich darauf hingewiesen, daß diese möglichen Zusatzfunktionen (alleine oder kumuliert) nicht nur bei nach der klassischen Theorie der Regelungstechnik "reinen" zeitoptimalen Reglern anwendbar bzw. umsetzbar sind, sondern auch bei "im wesentlichen zeitoptimalen Reglern", d.h. solchen, die die in der vorliegenden Erfindung beschriebenen Grundlagen nutzen.

Nach einer ersten möglichen Zusatzfunktion kann somit eine sog. Schwebeposition des Ankers 4d in einer fiktiven Endlage eingestellt werden, in welcher der Anker 4d zumindest geringfügig von der ihn einfangenden Spule 4a bzw. 4b beabstandet bleibt. Somit wird anstelle der mechanischen Endlage des Ankers 4d beim Öffnen und/oder beim Schließen des Hubventiles 1 eine fiktive Endlage vor der jeweiligen Elektromagnet-Spule 4a bzw. 4b angefahren, und der Anker in dieser Zwischenposition durch einen Regler in der Schwebe gehalten. Da dann kein Auftreffen des Ankers 4d auf der jeweiligen Spule 4a bzw. 4b stattfindet, wird hierdurch die Geräuschentwicklung erheblich um ein weiteres reduziert.

Ein derartiges Schweben des Ankers 4d und somit des Hubventiles 1 erfordert jedoch eine vollständige Steuerbarkeit; d.h. der Regler der Schwebephase muß daher ein linearer oder nichtlinearer Zustandsregler sein, wie dies bereits in Verbindung mit dem Zusatzregler 11 beschrieben wurde.

Nach einer zweiten möglichen Zusatzfunktion kann eine Schwebeposition des Ankers 4d in einer (anderen) fiktiven Endlage eingestellt werden, in welcher der Anker 4d zumindest geringfügig von der ihn zuvor freigebenden Spule 4a bzw. 4b beabstandet bleibt. Somit wird bspw. bei einer Öffnungsbewegung des Hubventiles 1 nicht die Öffner-Spule 4b (vgl. hierzu nochmals Fig.1), sondern eine fiktive Endlage des Ankers in der Nähe der Schließer-Spule 4a angefahren, die bspw. einem minimalen Ventilhub des Hubventiles 1 von ca. 1 mm bis 2 mm entspricht. Wird der Anker 4d und somit das Hubventil 1 in einer derartigen Position in der Schwebe gehalten, so kann diese Funktion insbesondere bei einer Verwendung des Aktuators 4 zur Betätigung des Brennkraftmaschinen-Einlaßventiles zur verbesserten Gemischaufbereitung und im Falle einer Betätigung des Brennkraftmaschinen-Auslaßventiles zur Optimierung der Ladungsbewegung eingesetzt werden.

Nach einer dritten möglichen Zusatzfunktion kann ein Anfahren einer ersten Quasi-Endlage des Ankers 4d erfolgen, in welcher der Anker 4d zumindest geringfügig von der ihn einfangenden Spule 4a oder 4b beabstandet bleibt, wonach eine zweite Endlage angefahren wird, die der mechanischen Endlage des Ankers 4d entspricht. Mit dieser Funktion ist quasi ein elektronischer Ventilspielausgleich im Hubventiltrieb einer Brennkraftmaschine möglich. Demzufolge wird bei einem Schließvorgang des Brennkraftmaschinen-Hubventiles 1 zunächst eine erste Endlage des Ankers 4d angefahren, die dem Aufsetzen des Hubventils 1 auf seinem Ventilsitz entspricht. Anschließend daran wird der Anker 4d in eine zweite Endlage gefahren, die seiner eigenen mechanischen Endlage entspricht. Beim Öffnen des Hubventils 1 wird dann eine erste Endlage entsprechend dem Ventilspiel angefahren und anschließend eine zweite Endlage, die der mechanischen Endlage des Ankers 4d an der Öffner-Spule 4b entspricht. Statt der mechanischen Endlagen können hierbei im übrigen auch fiktive Endlagen angefahren werden.

Beim bislang beschriebenen Verfahren zur Bewegungssteuerung eines Ankers eines elektromagnetischen Aktuators folgt die Ankerbewegung (sowie im bevorzugten Anwendungsfall die Bewegung des Brennkraftmaschinen-Hubventiles) quasi nur in der letzte Phase des Bewegungsablaufes einer vorgegebenen Solltrajektorie, während die jeweilige Bewegung in den vorhergehenden Phasen nicht exakt bestimmt ist. Dabei ist die jedoch die Ankerbewegung und im bevorzugten Anwendungsfall die Hubventil-Bewegung nicht exakt definierbaren Schwankungen unterworfen, die ihre Ursache in üblichen Serienstreuungen der verwendeten Bauteile sowie ggf. in zusätzlichen Störkräften (bspw. resultierend aus dem Gaswechsel der Brennkraftmaschine) haben.

Diese Abweichungen durch Serienstreuungen und Störkräfte können sich in ungünstigen Fällen bis zum Beginn der genannten Regelung mit Hilfe der Solltrajektorie aufsummieren, wobei große Abweichungen dann bis zum Auftreffen des Ankers auf der ihn einfangenden Spule nicht mehr vollständig ausgeglichen werden können und somit zu erhöhten Auftreffgeschwindigkeiten und damit verbundenen Akustiknachteilen führen können. Auch können im bevorzugten Anwendungsfall der Betätigung eines Gaswechsel-Hubventiles die genannten Abweichungen eine daraus resultierende Variation der Hubventil-Bewegung zur Folge haben, was eine Variation der Gasbewegung in der Brennkraftmaschine und damit eine nicht mehr optimale Verbrennung verursachen könnte.

Im Sinne einer besonders vorteilhaften Weiterbildung der vorliegenden Erfindung können auch diese Nachteile vermieden werden, wenn mit Hilfe der Solltrajektorie die Anker-Bewegung im wesentlichen im gesamten möglichen Bereich, in welchem die von der Elektromagnet-Spule induzierte Magnetkraft die Bewegung des Ankers beeinflussen kann, geregelt wird. Dabei kann auch die Bewegung des sich von der zuvor mit einem Haltestrom beaufschlagten Elektromagnet-Spule entfernenden Ankers im wesentlichen im gesamten möglichen Bereich, in welchem die von dieser zuvor mit einem Haltestrom beaufschlagten Spule induzierte Magnetkraft die Bewegung des Ankers beeinflussen kann, mit Hilfe einer Solltrajektorie geregelt werden.

Ergänzend zu den bisherigen Erläuterungen wird somit vorgeschlagen, die Ankerbewegung (sowie im bevorzugten Anwendungsfall die Bewegung des Brennkraftmaschinen-Gaswechselventiles) über einen möglichst großen Bereich der Bewegungsstrecke zu regeln, und zwar im Hinblick auf eine Reduzierung des erforderlichen Regelungs- bzw. Rechenaufwandes mit Hilfe einer Solltrajektorie. Die Größe des jeweiligen Regelbereiches ist dabei abhängig von der Magnetkraft des Aktuators, d.h. es ist selbstverständlich nur in demjenigen Bereich der Anker-Bewegung eine Beeinflussung derselben möglich, in welchem die von der jeweiligen Elektromagnet-Spule induzierte Magnetkraft auf die Ankerbewegung Einfluß nehmen kann. Dabei läßt sich dieser mögliche Beeinflussungs-Bereich durch geeignete Dimensionierung der Elektromagnet-Spule(n) jedoch wie gewünscht dimensionieren.

Bevorzugt kann mittels jeder der beiden Elektromagnet-Spulen, zwischen denen der Anker oszillierend bewegt wird, der ihr benachbarte, sich bis zur Mittellage des Ankers exakt zwischen den beiden Magnet-Spulen erstreckende Bereich abdeckbar bzw. hinsichtlich der Anker-Bewegung beeinflußbar sein.

Wird dabei auch die Bewegung des sich von der zuvor mit einem Haltestrom beaufschlagten Elektromagnet-Spule entfernenden Ankers im wesentlichen im gesamten möglichen Bereich, in welchem die von dieser zuvor mit einem Haltestrom beaufschlagten Spule induzierte Magnetkraft die Bewegung des Ankers beeinflussen kann, mit Hilfe einer Solltrajektorie geregelt, so kann auch die erste Bewegungsphase des Ankers, während derer er sich von einer der beiden Spulen wegbewegt, beeinflußt werden. Auf diese Weise wird der ansonsten nicht beeinflußbare Bewegungsbereich vorteilhafterweise nochmals deutlich eingeschränkt. Reicht dabei die in den beiden Elektromagnet-Spulen induzierbare Magnetkraft jeweils bis zur bereits genannten Mittellage, bei welcher sich der Anker exakt zwischen diesen beiden Spulen befindet, so kann die gesamte Bewegung des Ankers zwischen den beiden Elektromagnet-Spulen entlang einer Solltrajektorie zunächst über die erste und anschließend über die zweite Spule geregelt werden.

Im bevorzugten Anwendungsfall erhält man somit einen vollständig geregelten Brennkraftmaschinen-Ventiltrieb.

Ein derartiges Verfahren zur Bewegungssteuerung eines Ankers eines elektromagnetischen Aktuators zeichnet sich somit durch eine noch weiter erhöhte Robustheit aus, da die Ankerbewegung nicht nur am Ende des Bewegungsablaufes, sondern während des gesamten Bewegungsvorganges korrigierbar ist, wodurch größere Exemplarstreuungen der Aktuatoren und auch die genannten Störkräfte ausgeglichen werden können. Ferner ergibt sich eine exakte Reproduzierbarkeit der Ankerbewegung (sowie im bevorzugten Anwendungsfall der Gaswechselventil-Bewegung) trotz Exemplarstreuungen und Störkräften und somit ein entsprechend reproduzierbarer Gaswechsel der Brennkraftmaschine.

Für den bevorzugten Anwendungsfall der Betätigung eines Gaswechsel-Hubventiles einer Brennkraftmaschine wird femer eine frei wählbare Ventilbewegung ermöglicht. War diese Ventilbewegung nämlich bisher mit Ausnahme der Endphase durch die Dynamik des elektromagnetischen Aktuators festgelegt, so kann sie nunmehr durch Wahl einer entsprechenden Solltrajektorie an den jeweiligen Betriebspunkt der Brennkraftmaschine angepaßt werden. Insbesondere kann eine Öffnungsbewegung des Gaswechselventiles nun durch geeignete Vorgabe einer entsprechenden Solltrajektorie verlangsamt werden, wodurch sich geringere Druckimpulse in der Sauganlage und/oder Abgasanlage der Brennkraftmaschine ergeben und das Gaswechselgeräusch reduziert wird.

Abschließend seien (nochmals) die signifikanten weiteren Vorteile des erfindungsgemäßen Verfahrens, resultierend aus der Verwendung eines (zumindest im wesentlichen) zeitoptimalen Reglers 10 sowie ggf. der beschriebenen Zusatz-Elemente bzw. -Funktionen zusammengestellt:

Die vorgeschlagene vollständige Zustandsrückführung ermöglicht die Darstellung beliebig niedriger Auftreffgeschwindigkeiten des Ankers 4d auf der jeweiligen Elektromagnet-Spule 4a bzw. 4b.

Die unvermeidliche Verlängerung der Flugzeit durch die Bremsphase BP wird auf ein Minimum beschränkt. Der (im wesentlichen) zeitoptimale Regler 10 definiert das erreichbare Limit.

Der (im wesentlichen) zeitoptimale Regler 10 arbeitet mit minimaler Schalthäufigkeit; Umschaltverluste in der Leistungselektronik und elektromagnetische Störfelder werden minimiert.

Durch eine Zusatzregelung insbesondere in der Auftreffphase AP kann die Robustheit gegenüber Fertigungstoleranzen, Alterung und Störkräften (wie z.B. auf das Hubventil wirkende Gaskräfte) erhöht werden.

Eine weitere Steigerung der Robustheit wird durch eine Zusatzregelung in der Bremsphase BP erreicht.

Die beschriebene mögliche Zusatzfunktion des Schwebens, in welcher der Anker 4d eine Regler-Endlage einnimmt, die sich von der mechanischen Endlage unterscheidet, ermöglicht eine weitere Reduktuion des Geräuschniveaus.

Die beschriebene mögliche Zusatzfunktion eines minimalen Ventilhubes des Brennkraftmaschinen-Hubventiles 1 ermöglicht eine verbesserte Gemischaufbereitung und Ladungsbewegung in bzw. an der Brennkraftmaschine, ohne daß hierzu konstruktive Änderungen des Aktuators 4 erforderlich sind.

Die beschriebene mögliche Zusatzfunktion des elektronischen Ventilspielausgleiches ermöglicht einen Spielausgleich am Brennkraftmaschinen-Hubventil, ebenfalls ohne konstruktive Änderungen am Aktuator 4. Insbesondere wird hiermit das in Fig.1 noch dargestellte und mit der Bezugsziffer 3 bezeichnete hydraulische Ventilspielausgleichselement nicht mehr benötigt.

Ferner wird das Problem der Messung aller benötigten Zustandsgrößen durch den Einsatz des Beobachters 11 basierend auf den Meßgrößen Ventilhub bzw. Ankerposition z und Spulenstrom I gelöst.

Dabei sei abschließend noch darauf hingewiesen, daß eine Vielzahl von Details durchaus abweichend vom gezeigten Ausführungsbeispiel gestaltet sein können, ohne den Inhalt der Patentansprüche zu verlassen.

Bezugszeichenliste:

1 Hubventil
2a Ventilschließfeder = (erste) Rückstellfeder
2b Ventilöffnungsfeder = (zweite) Rückstellfeder
3 Ventilspielausgleichselement

4 Aktuator
4a Elektromagnet-Spule = Schließer-Spule
4b Elektromagnet-Spule = Öffner-Spule
4c Stößelstange
4d Anker

10 zeitoptimaler Regler

| | |
|---|---|
| 11 | Beobachter |
| 114 | Aktuatormodell |
| 115 | Korrekturfunktion |
| 12 | Zusatzregler |

| | |
|---|---|
| AP | Auftreffphase |
| BP | Bremsphase |
| FP | Fangphase |
| HP | Haltephase |

| | |
|---|---|
| I | Stromfluß in 4a, 4b |
| U | elektrische Spannung an 4a, 4b |
| $T_i$ | Soll-Trajektorie in ZR |
| ZR | Zustandsraum |

| | |
|---|---|
| t | Zeit |
| z | Position des Ankers 4d = Wegkoordinate der Anker-Position |
| $\dot{z}$ | Bewegungsgeschwindigkeit des Ankers 4d |
| $\ddot{z}$ | Ankerbeschleunigung |

| | |
|---|---|
| $z_1$ | Schwelle = Anker-Position zum Starten von FP |
| $z_2$ | Schaltfläche in ZR |
| $z_3$ | Schaltkurve auf $z_2$ |

**Patentansprüche**

1.  Verfahren zur Bewegungssteuerung eines Ankers (4d) eines elektromagnetischen Aktuators (4), insbesondere zur Betätigung eines Gaswechsel-Hubventiles (1) einer Brennkraftmaschine, wobei der Anker (4d) oszillierend zwischen zwei Elektromagnet-Spulen (4a, 4b) jeweils gegen die Kraft zumindest einer Rückstellfeder (2a, 2b) durch alternierende Bestromung der Elektromagnet-Spulen (4a, 4b) bewegt wird, und wobei mit einer Annäherung des Ankers (4d) an die zunächst bestromte Spule (4a oder 4b) während des sogenannten Fangvorganges die an der den Anker (4d) einfangenden Spule (4a, 4b) anliegende elektrische Spannung (U) reduziert wird,
    **dadurch gekennzeichnet, daß** während des Fangvorganges die Spannung (U) zunächst auf den Wert "Null" reduziert und somit abgeschaltet wird, so daß sich an die Fangphase (FP) des Fangvorganges eine Bremsphase (BP) anschließt, und daß kurz vor dem Auftreffen des Ankers (4d) auf die Spule (4a, 4b) an diese wieder elektrische Spannung (U) angelegt und diese somit eingeschaltet wird,
    wobei die jeweiligen Schalt-Zeitpunkte aus einer im wesentlichen zeitoptimalen Regelung abgeleitet werden.

2.  Verfahren nach Anspruch 1,
    **dadurch gekennzeichnet, daß** eine zeitoptimale Regelung dritter Ordnung zur Anwendung kommt.

3.  Verfahren nach Anspruch 1,
    **dadurch gekennzeichnet, daß** eine zeitoptimale Regelung zweiter Ordnung oder vierter Ordnung oder fünfter Ordnung zur Anwendung kommt.

4.  Verfahren nach Anspruch 2,
    **dadurch gekennzeichnet, daß** bei einem zeitoptimalen Regler (10) dritter Ordnung als Zustandsgrößen die Position des Ankers (z), dessen Bewegungsgeschwindigkeit ($\dot{z}$) und die Anker-Beschleunigung ($\ddot{z}$) berücksichtigt werden.

5.  Verfahren nach einem Ansprüche 2 oder 4,
    **dadurch gekennzeichnet, daß** im Laufe einer Flug-Bewegung des Ankers (4d) in Richtung zur ihn einfangenden Elektromagnet-Spule (4a, 4b)

    -   die Fangphase (FP) durch Beaufschlagen dieser Spule (4a, 4b) mit elektrischer Spannung (U) gestartet wird, sobald die Ankerposition (z) eine wählbare Schwelle ($z_1$) erreicht,
    -   die sich daran anschließende Bremsphase (BP) durch Abschalten der elektrischen Spannung (U) gestartet wird, sobald die Ankerposition (z) eine Schaltfläche ($z_2$) erreicht, die über den drei Zustandsgrößen Ankerposition (z), Bewegungsgeschwindigkeit ($\dot{z}$) des Ankers und Anker-Beschleunigung ($\ddot{z}$) aufgespannt ist,

- die sich daran anschließende Auftreffphase (AP) durch WiederEinschalten der elektrischen Spannung (U) gestartet wird, sobald die Ankerposition (z) eine in der Schaltfläche ($z_2$) liegende Schaltkurve ($z_3$) erreicht, die durch die beiden Zustandsgrößen Bewegungsgeschwindigkeit ($\dot{z}$) des Ankers und Anker-Beschleunigung ($\ddot{z}$) definiert ist,

- die sich daran anschließende Haltephase (HP) durch Umschalten auf Haltestromregelung gestartet wird, sobald der Anker (4d) sicher an der ihn einfangenden Elektromagnet-Spule (4a, 4b) anliegt.

6. Verfahren nach einem der vorangegangenen Ansprüche,
**dadurch gekennzeichnet, daß** ein im wesentlichen zeitoptimaler Regler (10) die genannten Schalt-Zeitpunkte bezüglich der an eine der Elektromagnet-Spulen (4a,4b) anzulegenden Spannung (U) anhand einer die Anker-Sollbewegung beschreibenden Soll-Trajektorie ($T_i$) bestimmt.

7. Verfahren nach einem der vorangegangenen Ansprüche,
**dadurch gekennzeichnet, daß** dem im wesentlichen zeitoptimalen Regler (10) ein Zusatzregler (12) nebengeordnet ist, der die Annäherung des Ankers (4d) an die ihn einfangende Spule (4a, 4b) überwacht und in welchem die Soll-Trajektorien ($T_i$) aus dem im wesentlichen zeitoptimalen Regler (10) übernommen und zeit- oder wegabhängig abgelegt werden, und der eine zusätzliche Regelung insbesondere in der Auftreffphase (AP) vornimmt.

8. Verfahren nach einem der vorangegangenen Ansprüche,
**dadurch gekennzeichnet, daß** die vom Regler (10, 12) benötigten Zustandsgrößen durch einen Beobachter (11) rekonstruiert werden.

9. Verfahren nach einem der vorangegangenen Ansprüche,
**dadurch gekennzeichnet, daß** zumindest eine Zusatzfunktion integriert ist, nach welcher die Soll-Trajektorien ($T_i$) des im wesentlichen zeitoptimalen Reglers (10) nicht zu einer mit der mechanischen Endlage des Ankers (4d) übereinstimmenden Endlage des Reglers (10) führen.

10. Verfahren nach Anspruch 9,
**dadurch gekennzeichnet, daß** durch die Zusatzfunktion zumindest eine der folgenden Funktionen erzeugbar ist:

- eine Schwebeposition des Ankers (4d) in einer fiktiven Endlage, in welcher der Anker (4d) zumindest geringfügig von der ihn einfangenden Spule (4a, 4b) beabstandet bleibt,

- eine Schwebeposition des Ankers (4d) in einer fiktiven Endlage, in welcher der Anker (4d) zumindest geringfügig von der ihn zuvor freigebenden Spule (4b, 4a) beabstandet bleibt,

- ein Anfahren einer ersten Quasi-Endlage des Ankers (4d), in welcher der Anker (4d) zumindest geringfügig von der ihn einfangenden Spule (4a, 4b) beabstandet bleibt, und ein sich daran anschließende Anfahren einer zweiten Endlage, die der mechanischen Endlage des Ankers (4d) entspricht.

11. Verfahren nach einem der vorangegangenen Ansprüche,
**dadurch gekennzeichnet, daß** mit Hilfe der Solltrajektorie ($T_i$) die Anker-Bewegung im wesentlichen im gesamten möglichen Bereich, in welchem die von der Elektromagnet-Spule induzierte Magnetkraft die Bewegung des Ankers beeinflussen kann, geregelt wird.

12. Verfahren zur Bewegungssteuerung nach Anspruch 11,
**dadurch gekennzeichnet, daß** auch die Bewegung des sich von der zuvor mit einem Haltestrom beaufschlagten Elektromagent-Spule entfernenden Ankers im wesentlichen im gesamten möglichen Bereich, in welchem die von dieser zuvor mit einem Haltestrom beaufschlagten Spule induzierte Magnetkraft die Bewegung des Ankers beeinflussen kann, mit Hilfe einer Solltrajektorie geregelt wird.

**Claims**

1. A method of controlling the motion of an armature (4d) of an electromagnetic actuator (4), especially for operating a gas change gate valve (1) of an internal combustion engine, wherein the armature (4d) is moved in oscillation between two electromagnet coils (4a, 4b) in each case against the force of at least one return spring (2a, 2b) by alternately energising the electromagnet coils (4a, 4b), and wherein when the armature (4d) approaches the initially energised coil (4a or 4b) during the so-called capture process, the voltage (U) applied to the coil (4a, 4b) trapping the armature (4d) is reduced,

**characterised in that** during the capture process, the voltage (U) is initially reduced to zero, and is consequently switched off, so that the capture phase (FP) in the capture process is followed by a deceleration phase (BP) and shortly before the armature (4d) strikes the coil (4a, 4b), a voltage (U) is again applied to the coil, and is consequently switched on,

wherein the respective switching times are derived from a substantially time-optimal control system.

2. A method according to claim 1, **characterised in that** a third-order time-optimal control system is used.

3. A method according to claim 1, **characterised in that** a second-order or fourth-order or fifth-order time-optimal control system is used.

4. A method according to claim 2, **characterised in that** in the case of a third-order time-optimal controller (10), the variables of state taken into account are of the position (z), the speed ($\dot{z}$) and the acceleration ($\ddot{z}$) of the armature.

5. A method according to claim 2 or 4, **characterised in that** during the flight of the armature (4d) in the direction towards the electromagnet coil (4a, 4b) capturing it

   - the capture phase (FP) is started by applying a voltage (U) to the coil (4a, 4b) as soon as the armature position (z) reaches a selectable threshold ($z_1$),

   - the immediately following deceleration phase (BP) is started by switching off the voltage (U) as soon as the armature position (z) reaches a switching surface ($z_2$) defined by the three variables of state, that is the armature position (z), the speed ($\dot{z}$) of the armature and the armature acceleration ($\ddot{z}$),

   - the immediately following impact phase (AP) is started by switching on the voltage (U) again as soon as the armature position (z) reaches a switching curve ($z_3$) on the switching surface ($z_2$) and defined by the following two variables of state: the speed ($\dot{z}$) of the armature and the armature acceleration ($\ddot{z}$), and

   - the immediately following retaining phase (HP) is started by switching over to retaining-current control as soon as the armature (4d) safely reaches the electromagnetic coil (4a, 4b) trapping it.

6. A method according to any of the preceding claims, **characterised in that** a substantially time-optimal controller (10) determines the said switching times as regards the voltage (U) to be applied to one of the electromagnet coils (4a, 4b) in accordance with the set trajectory (T) describing the set motion for the armature.

7. A method according to any of the preceding claims, **characterised in that** the substantially time-optimal controller (10) is associated with an additional controller (12) which monitors the approach of the armature (4d) to the coil (4a, 4b) capturing it and in which the set trajectories ($T_i$) are taken over from the substantially time-optimal controller (10) and are filed by time or distance, and the additional controller carries out additional control, especially in the impact phase (AP).

8. A method according to any of the preceding claims, **characterised in that** the variables of state needed by the controller (10, 12) are reconstructed by an observer (11).

9. A method according to any of the preceding claims, **characterised by** incorporation of at least one additional function according to which the set trajectories ($T_i$) of the substantially time-optimal controller (10) do not result in an end position of the controller (10) coinciding with the mechanical end position of the armature (4d).

10. A method according to claim 9, **characterised in that** the additional function can generate at least one of the following functions:

    - a hovering position of the armature (4d) in an imaginary end position in which the armature (4d) remains at at least a slight distance from the coil (4a, 4b) capturing it,

    - a hovering position of the armature (4d) in an imaginary end position in which the armature (4d) remains at at least a slight distance from the coil (4a, 4b) capturing it,

- a start towards a first quasi-end position of the armature (4d) in which the armature (4d) remains at at least a slight distance from the coil (4a, 4b) trapping it, and an immediately following start towards a second end position corresponding to the mechanical end position of the armature (4d).

**11.** A method according to any of the preceding claims,
**characterised in that** by means of a set trajectory ($T_i$), the motion of the armature is controlled over substantially the entire possible range in which the magnetic force induced by the electromagnetic coil can influence the motion of the armature.

**12.** A method of controlling the motion according to claim 11,
**characterised in that** the motion of the armature moving away from the electromagnet coil previously energised with a retaining current is controlled, by means of a set trajectory, substantially over the entire possible range through which the magnetic force induced by the coil previously energised with a retaining current can influence the motion of the armature.

**Revendications**

**1.** Procédé de commande du mouvement d'un induit (4d) d'un actionneur électromagnétique (4), en particulier pour actionner une soupape à course rectiligne d'échange de gaz (1) d'un moteur à combustion interne, l'induit (4d) est déplacée en oscillations entre deux bobines électromagnétiques (4a, 4b) en contrariant chaque fois la force d'au moins un ressort de rappel (2a, 2b) par une alimentation en alternance de courant aux bobines électromagnétiques (4a, 4b) et selon lequel, avec un rapprochement de l'induit (4d) vers la bobine (4a, 4b) alimentée en courant en premier pendant ce que l'on appelle le processus de capture, on réduit la tension électrique (U) présente à la bobine (4a, 4b) capturant l'induit (4d) est réduite,
**caractérisé en ce que**
pendant un processus de capture, la tension (U) est, dans un premier temps, réduite à la valeur « zéro » et ainsi débranchée, si bien qu'une phase de freinage (BP) s'enchaîne après la phase de capture (FP) du processus de capture et que juste avant l'impact de l'induit (4d) sur la bobine (4a, 4b) une tension électrique (U) lui est de nouveau appliquée et ainsi, branchée, les instants de commutation correspondants étant dérivés d'une régulation pour l'essentiel optimisée dans le temps.

**2.** Procédé selon la revendication 1,
**caractérisé par**
une régulation optimisée dans le temps d'ordre 3.

**3.** Procédé selon la revendication 1,
**caractérisé par**
une régulation optimisée dans le temps d'ordre 2, ou d'ordre 4, ou d'ordre 5.

**4.** Procédé selon la revendication 2,
**caractérisé en ce que**
dans un régulateur optimisée dans le temps (10) d'ordre 3, la position de l'induit (z), sa vitesse de déplacement ($\dot{z}$) et l'accélération d'induit ($\ddot{z}$) sont prises en compte en tant que grandeurs d'état.

**5.** Procédé selon l'une des revendications 2 ou 4,
**caractérisé en ce qu'**
au cours d'un mouvement de vol de l'induit (4d) en direction de la bobine électromagnétique (4a, 4b) la capturant

- la phase de capture (FP) est démarrée par application de tension électrique (U) à cette bobine (4a, 4b) dès que la position d'induit ($\dot{z}$) atteint un seuil ($z_1$) choisi,
- la phase de freinage (BP) s'y enchaînant est démarrée par débranchement de la tension électrique (U) dès que la position d'induit (z) atteint une surface de commutation ($z_2$) qui est délimitée par les trois grandeurs d'état, position d'induit (z), vitesse de déplacement ($\dot{z}$) de l'induit et accélération d'induit ($\ddot{z}$),
- la phase d'impact (AP) s'y enchaînant est démarrée par rebranchement de la tension électrique (U) dès que la position d'induit (z) atteint une courbe de commutation ($z_3$) figurant dans la surface de commutation ($z_2$), qui est définie par les deux grandeurs d'état, vitesse de déplacement ($\dot{z}$) de l'induit et accélération d'induit ($\ddot{z}$),
- la phase d'arrêt (HP) s'y enchaînant est démarrée par commutation sur la régulation de courant d'arrêt dès que l'induit (4d) s'applique de façon sûre à la bobine électromagnétique (4a, 4b) la capturant.

6. Procédé selon l'une quelconque des précédentes revendications,
**caractérisé en ce qu'**
un régulateur pour l'essentiel optimisé dans le temps (10) détermine les instants de commutation cités sur le plan d'une tension (U) à appliquer à l'une des bobines électromagnétiques (4a, 4b) à l'aide d'une trajectoire de consigne (Ti) décrivant le mouvement de consigne d'induit.

7. Procédé selon l'une quelconque des précédentes revendications,
**caractérisé en ce que**
au régulateur pour l'essentiel optimisé dans le temps (10), on juxtapose un régulateur complémentaire (12) qui surveille l'approche de l'induit (4d) de la bobine électromagnétique (4a, 4b) la capturant et dans lequel la trajectoire de consigne (Ti) est reprise du régulateur pour l'essentiel optimisée dans le temps (10) et déposée en fonction du temps et du parcours, et qui procède à une régulation complémentaire en particulier pendant la phase d'impact (AP).

8. Procédé selon l'une quelconque des précédentes revendications,
**caractérisé en ce que**
les grandeurs d'état nécessaires au régulateur (10, 12) sont reconstruites par un observateur (11).

9. Procédé selon l'une quelconque des précédentes revendications,
**caractérisé en ce qu'**
au moins une fonction supplémentaire est intégrée selon laquelle les trajectoires de consigne (Ti) du régulateur pour l'essentiel optimisée dans le temps (10) ne conduisent pas à une position finale du régulateur (10) coïncidant avec la position finale mécanique de l'induit (4d).

10. Procédé selon la revendication 9,
**caractérisé en ce qu'**
au moins l'une des fonctions suivantes peut être créée par la fonction supplémentaire :

- une position de flottement de l'induit (4d) en une position finale fictive dans laquelle l'induit (4d) demeure au moins légèrement écarté de la bobine (4a, 4b) la capturant,
- une position de flottement de l'induit (4d) en une position finale fictive dans laquelle l'induit (4d) demeure au moins légèrement écarté de la bobine (4a, 4b) la libèrant,
- une approche d'une première position quasi finale de l'induit (4d) dans laquelle l'induit (4d) demeure au moins légèrement écartée de la bobine (4a, 4b) la capturant, et une approche s'y enchaînant d'une deuxième position finale correspondant à la position finale mécanique de l'induit (4d).

11. Procédé selon l'une quelconque des précédentes revendications,
**caractérisé en ce que**
le mouvement d'induit est régulé à l'aide de la trajectoire de consigne (Ti) pour l'essentiel dans la totalité du domaine possible dans lequel la force magnétique induite par les bobines magnétiques peut influer sur le mouvement de l'induit.

12. Procédé selon la revendication 11
**caractérisé en ce que**
le mouvement également de l'induit s'éloignant de la bobine électromagnétique à laquelle auparavant un courant d'arrêt était appliqué, est régulé à l'aide d'une trajectoire de consigne, pour l'essentiel dans la totalité du domaine possible dans lequel la force magnétique de la bobine électromagnétique à laquelle auparavant un courant d'arrêt était appliqué peut influer sur le mouvement de l'induit.

Fig. 1

EP 0 973 177 B1

Fig. 2

Fig. 5

Fig. 3

Fig. 4